# EUROPÄISCHE PATENTSCHRIFT

(11) **EP 3 623 725 B1**
(45) Veröffentlichungstag und Bekanntmachung des Hinweises auf die Patenterteilung: **19.08.2020**
(21) Anmeldenummer: 18194169.1
(22) Anmeldetag: 13.09.2018
(51) Int. Cl.: F25B 15/04, F25B 27/02

(54) **ABSORPTIONSMASCHINE UND SORPTIONSKREISPROZESS**
ABSORPTION MACHINE AND ABSORPTION CIRCUIT PROCESS
MACHINE À ABSORPTION ET PROCESSUS DE CIRCUIT À ABSORPTION

(43) Veröffentlichungstag der Anmeldung: 18.03.2020
(73) Patentinhaber: AGO AG Energie + Anlagen, 95326 Kulmbach (DE)
(72) Erfinder: Ramming, Klaus, 95336 Mainleus (DE)
(74) Vertreter: Bauer, Dirk

(56) Entgegenhaltungen:
- EP-A2- 2 803 923
- DE-B3-102017 100 281
- US-A- 3 248 891
- EDERA M ET AL: "Development of a new gas absorption chiller heater-advanced utilization of waste heat from gas-driven co-generation systems for air-conditioning", ENERGY CONVERSION AND MANAGEMENT, ELSEVIER SCIENCE PUBLISHERS, OXFORD, GB, Bd. 43, Nr. 9-12, 1. Juni 2002 (2002-06-01), Seiten 1493-1501, XP004346789, ISSN: 0196-8904, DOI: 10.1016/S0196-8904(02)00031-6

## Beschreibung

Die Erfindung betrifft zunächst eine Absorptionsmaschine mit einem Kältemittel und einem flüssigen Lösungsmittel, einer armen und einer reichen Lösung, wobei die arme und die reiche Lösung einphasige Mischungen des Lösungsmittels und des Kältemittels sind, sowie mit einem Absorber, in dem die arme Lösung das Kältemittel auf einem Niederdruckniveau absorbiert und dabei Abwärme abgibt, einer Lösungspumpe, die die dabei entstehende reiche Lösung nach Austritt aus dem Absorber auf ein Hochdruckniveau pumpt, mit einem Austreiber, in dem die reiche Lösung nach Austritt aus der Lösungspumpe einen Heizwärmestrom aufnimmt, mit einem Abscheider, in dem aus der reichen Lösung nach Austritt aus dem Austreiber das Kältemittel abgetrennt wird, wobei die arme Lösung verbleibt, mit einem Entspannungsventil, in dem die arme Lösung aus dem Abscheider vor Eintritt in den Absorber auf das Niederdruckniveau entspannt wird, mit einem Lösungswärmeübertrager, in dem die reiche Lösung zwischen der Lösungspumpe und dem Austreiber aus der armen Lösung zwischen dem Abscheider und dem Entspannungsventil Wärme aufnimmt, und mit einer Nutzkomponente, die das Kältemittel nach Austritt aus dem Abscheider und vor Eintritt in den Absorber auf das Niederdruckniveau entspannt und eine Potentialdifferenz des Kältemittels zwischen dem Hochdruckniveau und dem Niederdruckniveau technisch nutzbar macht. Die Erfindung betrifft weiterhin einen Sorptionskreisprozess mit einem Kältemittel und einem flüssigen Lösungsmittel, einer armen und einer reichen Lösung, wobei die arme und die reiche Lösung einphasige Mischungen des Lösungsmittels und des Kältemittels sind, wobei auf einem Niederdruckniveau zunächst das Kältemittel von der armen Lösung absorbiert wird und dabei Abwärme abgibt, die dabei entstehende reiche Lösung anschließend auf ein Hochdruckniveau gepumpt wird, dann einen Heizwärmestrom aufnimmt, der das Kältemittel aus der verbleibenden armen Lösung austreibt, und zuletzt das Kältemittel und die arme Lösung wieder auf das Niederdruckniveau entspannt werden, wobei die reiche Lösung auf dem Hochdruckniveau vor Aufnahme des Heizwärmestroms aus der armen Lösung vor dem Entspannen auf das Niederdruckniveau Wärme aufnimmt.

Eine Absorptionskältemaschine und ein darin ablaufender Sorptionskreisprozess der vorgenannten Art sind allgemein bekannt unter der Produktbezeichnung "Congelo" aus dem Angebot der Anmelderin.

In der bekannten Absorptionsmaschine wird die in der armen Lösung nach dem Austreiben des Kältemittels enthaltene Wärme vor dem Abführen als Abwärme im Absorber zum Aufheizen der reichen Lösung vor dem Austreiber genutzt und so zumindest teilweise zurückgewonnen. Die aus der armen in die reiche Lösung übertragene Wärme erhöht andererseits das Temperaturniveau der reichen Lösung im Austreiber und mindert dort deren Kapazität zur Aufnahme der Heizwärme aus dem Heizmedium und damit die energetische Effizienz des Sorptionskreisprozesses. Außerdem beschränkt die erhöhte Temperatur der reichen Lösung den Anwendungsbereich des Sorptionskreisprozesses, weil die Mindesttemperatur des im Austreiber aufgenommenen Heizwärmestroms gesteigert wird.

Aus der Veröffentlichung "Development of a new gas absorption chiller heater - advanced utilization of waste heat from gas-driven co-generation systems for air-conditioning" von M. Edera und H. Kojima (DOI: 10.2016/S0196-8904(02)00031-6) sind eine Absorptionskältemaschine gemäß dem Oberbegriff von Anspruch 1 bzw. ein Sorptionskreisprozess gemäß dem Oberbegriff von Anspruch 5 bekannt.

### Aufgabe

Der Erfindung liegt die Aufgabe zugrunde, die energetische Effizienz zu steigern und den Anwendungsbereich zu erweitern.

### Lösung

Eine erfindungsgemäße Absorptionskältemaschine ist in Anspruch 1 definiert; ein erfindungsgemäßer Soprtionskreisprozess ist in Anspruch 5 definiert. Ausgehend von der bekannten Absorptionsmaschine wird nach der Erfindung vorgeschlagen, einen weiteren Austreiber vorzusehen, in dem ein zwischen dem Lösungswärmeübertrager und dem Austreiber aus der reichen Lösung ausgekoppelter, parallel zu dem Austreiber geführter und zwischen dem Austreiber und dem Abscheider in die reiche Lösung wieder eingekoppelter Teilstrom aus der armen Lösung zwischen dem Abscheider und dem Lösungswärmeübertrager Wärme aufnimmt.

In der erfindungsgemäßen Absorptionsmaschine wird gegenüber dem Stand der Technik in Summe vom Lösungswärmeübertrager und vom weiteren Austreiber mehr Wärme aus der armen Lösung zurückgewonnen. Zusätzlich wird im Austreiber eine höhere Austrittstemperatur der reichen Lösung erzielt. Für die Aufnahme der Heizwärme wird so ein geringerer Lösungsstrom benötigt.

Der hinter den Austreibern wieder zusammengeführte Strom der reichen Lösung weist gegenüber dem Stand der Technik bei gleichem Heizwärmestrom ein höheres Temperaturniveau auf und kann daher im Verhältnis in dem Abscheider einen größeren Kältemittelstrom austreiben. Das in der erfindungsgemäßen Absorptionsmaschine umlaufende und von der Lösungspumpe umgewälzte Lösungsmittel kann so bei gleicher Kälteleistung um rund ein Viertel reduziert werden.

In der erfindungsgemäßen Absorptionsmaschine weist zudem die in den Austreiber geführte reiche Lösung gegenüber dem Stand der Technik eine geringere Temperatur auf. Der Anwendungsbereich der erfindungsgemäßen Absorptionsmaschine ist dadurch auf die Nutzung von Heizwärmeströmen mit entsprechend niedrigerem Temperaturniveau erweitert.

Vorzugsweise weist die Nutzkomponente einer erfindungsgemäßen Absorptionsmaschine einen Kondensator auf, in dem das Kältemittel nach Austritt aus dem Abscheider weitere Abwärme abgibt, ein Expansionsventil, in dem das Kältemittel nach Austritt aus dem Kondensator auf das Niederdruckniveau entspannt wird, und einen Verdampfer, in dem das Kältemittel nach Austritt aus dem Expansionsventil verdampft und dabei einem Kälteträger Wärme entzieht. Eine solche erfindungsgemäße Absorptionsmaschine ist eine Kältemaschine. Insbesondere die Nutzung von Ammoniak als Kälte- und Wasser als Lösungsmittel in einer solchen Absorptionsmaschine ist allgemein bekannt.

Vorzugsweise weist eine solche erfindungsgemäße Absorptionskältemaschine einen Kältemittelwärmeübertrager auf, in dem das Kältemittel zwischen dem Kondensator und dem Expansionsventil an das Kältemittel zwischen dem Verdampfer und dem Absorber Wärme abgibt. In einer solchen erfindungsgemäßen Absorptionskältemaschine entzieht das gasförmige Kältemittel vor dem Absorber dem flüssigen Kältemittel vor dem Verdampfer Wärme. Die aus dem Stand der Technik bekannte Absorptionskältemaschine weist dieses Merkmal auf.

Alternativ vorzugsweise weist die Nutzkomponente einer erfindungsgemäßen Absorptionsmaschine eine Strömungsmaschine mit einer rotierbaren Welle auf, wobei die Strömungsmaschine die Potentialdifferenz in mechanische Leistung der rotierbaren Welle umwandelt. Eine solche erfindungsgemäße Absorptionsmaschine ist eine Kraftmaschine. Insbesondere die AmmoniakWasser-Dampferzeugung in einer solchen Absorptionskraftmaschine ist als Kalina-Prozess allgemein bekannt.

Ausgehend von dem bekannten Sorptionskreisprozess wird nach der Erfindung vorgeschlagen, dass vor Aufnahme des Heizwärmestroms aus der reichen Lösung ein Teilstrom ausgekoppelt wird, aus der armen Lösung vor dem Entspannen auf das Niederdruckniveau Wärme aufnimmt und anschließend in die reiche Lösung wieder eingekoppelt wird. Der erfindungsgemäße Sorptionskreisprozess läuft in einer erfindungsgemäßen Absorptionsmaschine und zeichnet sich gleichermaßen durch deren vorstehend genannte Vorteile aus.

Vorzugsweise umfasst in einem erfindungsgemäßen Sorptionskreisprozess der Teilstrom zwischen 20 und 50 *vH,* vorzugsweise zwischen 30 und 40 *vH* der reichen Lösung.

Vorzugsweise gibt in einem erfindungsgemäßen Sorptionskreisprozess ein Heizmedium ausgehend von einer Eintrittstemperatur zwischen 80 und 160 °C, vorzugsweise zwischen 90 und 110 °C den Heizwärmestrom ab.

Vorzugsweise entzieht in einem erfindungsgemäßen Sorptionskreisprozess das von dem Hochdruckniveau auf das Niederdruckniveau entspannte Kältemittel einem Kälteträger ausgehend von einer Eintrittstemperatur zwischen +2 und -6 °C, vorzugsweise zwischen 0 und -40 °C Wärme.

In den genannten Grenzen zeichnet sich der erfindungsgemäße Sorptionskreisprozess durch eine besonders hohe energetische Effizienz aus.

Vorzugsweise ist in einem erfindungsgemäßen Sorptionskreisprozess das Kältemittel Ammoniak und das Lösungsmittel Wasser. Wasser und Ammoniak sind natürliche Stoffe und haben sich in der Kältetechnik bewährt.

### Ausführungsbeispiel

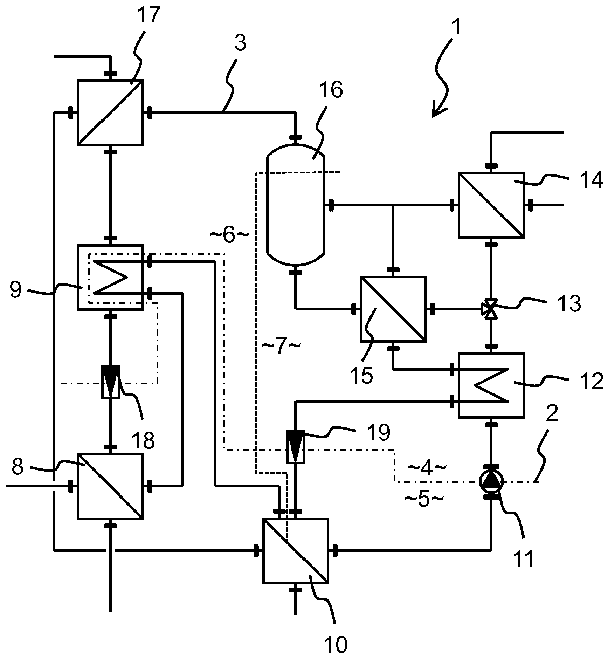

Die Erfindung wird nachfolgend anhand eines Ausführungsbeispiels erläutert. Die in der Figur in einer Prinzipskizze gezeigte erfindungsgemäße Absorptionsmaschine 1 ist eine Absorptionskältemaschine und wird mit Ammoniak als Kältemittel und Wasser als Lösungsmittel in einem Massenstromverhältnis von 1:15 betrieben. Die erfindungsgemäße Absorptionsmaschine 1 lässt sich entlang der gestrichelt angedeuteten Bereichsgrenzen 2 nach den Drücken der in den Leitungen 3 umlaufenden Medien in einen Hochdruckbereich 4 auf einem Hochdruckniveau von 13,5 *bar* und einen Niederdruckbereich 5 auf einem Niederdruckniveau von 3 *bar*, sowie nach der Art der Medien in einen Lösungsbereich 6 und einen Kältemittelbereich 7 unterteilen.

Im Niederdruckbereich 5 wird entspanntes Kältemittel in einem Verdampfer 8 verdampft, kühlt zunächst dort einen mit -2 °*C* eintretenden Kälteträger auf -5 °*C*, nimmt anschließend in einem Kältemittelwärmeübertrager 9 aus dem noch flüssigen Kältemittel im Hochdruckbereich 4 Wärme auf und wird schließlich in einem Absorber 10 von einer ammoniakarmen Lösung absorbiert und gibt Abwärme an einen mit 25 °*C* eintretenden Kühlwasserstrom ab.

Die aus dem Absorber 10 austretende ammoniakreiche Lösung wird in einer Lösungspumpe 11 in den Hochdruckbereich 4 gepumpt und nimmt zunächst in einem Lösungswärmeübertrager 12 Wärme auf. Die aus dem Lösungswärmeüberträger austretende reiche Lösung wird in einem Ventil 13 geteilt, wobei zunächst 65 *vH* der reichen Lösung in einem Austreiber 14 aus einem mit 100 °*C* einströmenden Heizmedium einen Heizwärmestrom aufnehmen und dieses auf 80 °*C* abkühlen. In dem Austreiber 14 wird die reiche Lösung dabei auf 93 °*C* aufgeheizt Parallel zu dem Austreiber 14 nimmt ein Teilstrom von 35 *vH* der reichen Lösung in einem weiteren Austreiber 15 Wärme auf, wird dabei auf 88 °*C* aufgeheizt und mit der reichen Lösung aus dem Austreiber 14 wieder zusammengeführt.

Der zusammengeführte Strom der reichen Lösung weist eine Temperatur von 91,5 °*C* auf. In einem als Rektifikationskolonne ausgebildeten Abscheider 16 wird aus der reichen Lösung das Kältemittel gasförmig abgetrennt, das anschließend in einem Kondensator 17 verflüssigt wird und dabei weitere Abwärme an den Kühlwasserstrom abgibt. Danach wird das Kältemittel im

Lösungswärmeübertrager 12 weiter abgekühlt und über ein Expansionsventil 18 in den Niederdruckbereich 5 geführt.

In dem Abscheider 16 verbleibt die ammoniakarme Lösung mit einer Temperatur von 91,4 °*C*, die zunächst in dem weiteren Austreiber 15 auf 81 °*C* und in dem Lösungswärmeübertrager 12 weiter auf 41 °*C* abgekühlt und schließlich über ein Entspannungsventil 19 in den Niederdruckbereich 5 und in den Absorber 10 geführt wird.

In den Figuren sind
- 1: Absorptionsmaschine
- 2: Bereichsgrenze
- 3: Leitung
- 4: Hochdruckbereich
- 5: Niederdruckbereich
- 6: Lösungsbereich
- 7: Kältemittelbereich
- 8: Verdampfer
- 9: Kältemittelwärmeübertrager
- 10: Absorber
- 11: Lösungspumpe
- 12: Lösungswärmeübertrager
- 13: Ventil
- 14: Austreiber
- 15: weiterer Austreiber
- 16: Abscheider
- 17: Kondensator
- 18: Expansionsventil
- 19: Entspannungsventil

## Patentansprüche

1. Absorptionsmaschine (1) mit einem Kältemittel und einem flüssigen Lösungsmittel, einer armen und einer reichen Lösung, wobei die arme und die reiche Lösung einphasige Mischungen des Lösungsmittels und des Kältemittels sind, sowie mit einem Absorber (10), in dem die arme Lösung das Kältemittel auf einem Niederdruckniveau absorbiert und dabei Abwärme abgibt, einer Lösungspumpe (11), die die dabei entstehende reiche Lösung nach Austritt aus dem Absorber (10) auf ein Hochdruckniveau pumpt, mit einem Austreiber (14), in dem die reiche Lösung nach Austritt aus der Lösungspumpe (11) einen Heizwärmestrom aufnimmt, mit einem Abscheider (16), in dem aus der reichen Lösung nach Austritt aus dem Austreiber (14) das Kältemittel abgetrennt wird, wobei die arme Lösung verbleibt, mit einem Entspannungsventil (19), in dem die arme Lösung aus dem Abscheider (16) vor Eintritt in den Absorber (10) auf das Niederdruckniveau entspannt wird, mit einem Lösungswärmeübertrager (12), in dem die reiche Lösung zwischen der Lösungspumpe (11) und dem Austreiber (14) aus der armen Lösung zwischen dem Abscheider (16) und dem Entspannungsventil (19) Wärme aufnimmt, und mit einer Nutzkomponente, die das Kältemittel nach Austritt aus dem Abscheider (16) und vor Eintritt in den Absorber (10) auf das Niederdruckniveau entspannt und eine Potentialdifferenz des Kältemittels zwischen dem Hochdruckniveau und dem Niederdruckniveau technisch nutzbar macht, ***gekennzeichnet durch*** einen weiteren Austreiber (15), in dem ein zwischen dem Lösungswärmeübertrager (12) und dem Austreiber (14) aus der reichen Lösung ausgekoppelter, parallel zu dem Austreiber (14) geführter und zwischen dem Austreiber (14) und dem Abscheider (16) in die reiche Lösung wieder eingekoppelter Teilstrom aus der armen Lösung zwischen dem Abscheider (16) und dem Lösungswärmeübertrager (12) Wärme aufnimmt.

2. Absorptionsmaschine (1) nach dem vorgenannten Anspruch, ***dadurch gekennzeichnet, dass*** die Nutzkomponente einen Kondensator (17) aufweist, in dem das Kältemittel nach Austritt aus dem Abscheider (16) weitere Abwärme abgibt, ein Expansionsventil (18), in dem das Kältemittel nach Austritt aus dem Kondensator (17) auf das Niederdruckniveau entspannt wird, und einen Verdampfer (8), in dem das Kältemittel nach Austritt aus dem Expansionsventil (18) verdampft und dabei einem Kälteträger Wärme entzieht.

3. Absorptionsmaschine (1) nach dem vorgenannten Anspruch, ***gekennzeichnet durch*** einen Kältemittelwärmeübertrager (9), in dem das Kältemittel zwischen dem Kondensator (17) und dem Expansionsventil (18) an das Kältemittel zwischen dem Verdampfer (8) und dem Absorber (10) Wärme abgibt.

4. Absorptionsmaschine nach Anspruch 1, ***dadurch gekennzeichnet, dass*** die Nutzkomponente eine Strömungsmaschine mit einer rotierbaren Welle aufweist, wobei die Strömungsmaschine die Potentialdifferenz in mechanische Leistung der rotierbaren Welle umwandelt.

5. Sorptionskreisprozess mit einem Kältemittel und einem flüssigen Lösungsmittel, einer armen und einer reichen Lösung, wobei die arme und die reiche Lösung einphasige Mischungen des Lösungsmittels und des Kältemittels sind, wobei auf einem Niederdruckniveau zunächst das Kältemittel von der armen Lösung absorbiert wird und dabei Abwärme abgibt, die dabei entstehende reiche Lösung anschließend auf ein Hochdruckniveau gepumpt wird, dann einen Heizwärmestrom aufnimmt, der das Kältemittel aus der verbleibenden armen Lösung austreibt, und zuletzt das Kältemittel und die arme Lösung wieder auf das Niederdruckniveau entspannt werden, wobei die reiche Lösung auf dem Hochdruckniveau vor Aufnahme des Heizwärmestroms aus der armen Lösung vor dem Entspannen auf das Niederdruckniveau Wärme aufnimmt, ***dadurch gekennzeichnet, dass*** vor Aufnahme des Heizwärmestroms aus der reichen Lösung ein Teilstrom ausgekoppelt wird, aus der armen Lösung vor dem Entspannen auf das Niederdruckniveau Wärme aufnimmt und anschließend in die reiche Lösung wieder eingekoppelt wird.

6. Sorptionskreisprozess nach dem vorgenannten Anspruch, ***dadurch gekennzeichnet, dass*** der Teilstrom zwischen 20 und 50 *vH,* vorzugsweise zwischen 30 und 40 *vH* der reichen Lösung umfasst.

7. Sorptionskreisprozess nach einem der vorgenannten Ansprüche, ***dadurch gekennzeichnet, dass*** ein Heizmedium ausgehend von einer Eintrittstemperatur zwischen 80 und 160 °*C*, vorzugsweise zwischen 90 und 110 °*C* den Heizwärmestrom abgibt.

8. Sorptionskreisprozess nach einem der vorgenannten Ansprüche, ***dadurch gekennzeichnet, dass*** das von dem Hochdruckniveau auf das Niederdruckniveau entspannte Kältemittel einem Kälteträger ausgehend von einer Eintrittstemperatur zwischen +2 und -6 °*C*, vorzugsweise zwischen 0 und -40 °*C* Wärme entzieht.

9. Sorptionskreisprozess nach einem der vorgenannten Ansprüche, ***dadurch gekennzeichnet, dass*** das Kältemittel Ammoniak und das Lösungsmittel Wasser ist.

## Claims

1. An absorption machine (1) having a refrigerant and a liquid solvent, a weak and a rich solution, wherein the weak and the rich solution are single-phase mixtures of the solvent and of the refrigerant, and also having an absorber (10) in which the weak solution absorbs the refrigerant at a low-pressure level and thereby releases waste heat, a solution pump (11) which pumps the rich solution thereby created after leaving the absorber (10) to a high-pressure level, having an ejector (14) in which the rich solution takes up a thermal heat flow after leaving the solution pump (11), having a separator (16) in which the refrigerant is separated from the rich solution after leaving the ejector (14), wherein the weak solution remains, having an expansion valve (19) in which the weak solution from the separator (16) is stress-relieved before entering the absorber (10) to the low-pressure level, having a solution heat exchanger (12) in which the rich solution takes up heat between the solution pump (11) and the ejector (14) from the weak solution between the separator (16) and the expansion valve (19), and having a useful component which stress-relieves the refrigerant after leaving the separator (16) and before entering the absorber (10) to the low-pressure level and makes a potential difference of the refrigerant between the high-pressure level and the low-pressure level technically usable, **characterized by** a further ejector (15) in which a partial flow which is uncoupled from the rich solution between the solution heat exchanger (12) and the ejector (14), is guided parallel to the ejector (14) and is once again coupled with the rich solution between the ejector (14) and the separator (16) takes up heat from the weak solution between the separator (16) and the solution heat exchanger (12).

2. The absorption machine (1) according to the aforementioned claim, **characterized in that** the useful component has a capacitor (17) in which the refrigerant gives off further waste heat after leaving the separator (16), an expansion valve (18) in which the refrigerant is stress-relieved after leaving the capacitor (17) to the low-pressure level and an evaporator (8) in which the refrigerant evaporates after leaving the expansion valve (18) and thereby removes heat from a refrigerating medium.

3. The absorption machine (1) according to the aforementioned claim, **characterized by** a refrigerant heat exchanger (9) in which the refrigerant gives off heat between the capacitor (17) and the expansion valve (18) to the refrigerant between the evaporator (8) and the absorber (10).

4. The absorption machine according to claim 1, **characterized in that** the useful component comprises a fluid flow engine with a rotatable shaft, wherein the fluid flow engine converts the potential difference into mechanical output of the rotatable shaft.

5. An absorption circuit process having a refrigerant and a liquid solvent, a weak and a rich solution, wherein the weak and the rich solution are single-phase mixtures of the solvent and of the refrigerant, wherein the refrigerant is initially absorbed from the weak solution at a low-pressure level and gives off waste heat during this process, the rich solution thereby produced is then pumped at a high-pressure level, then takes up a thermal heat flow which expels the refrigerant from the remaining weak solution, and the refrigerant and the weak solution are finally stress-relieved to the low-pressure level, wherein the strong solution at the high-pressure level takes up heat before receiving the thermal heat flow from the weak solution prior to stress-relieving to the low-pressure level, **characterized in that** prior to receiving the thermal heat flow from the rich solution, a partial flow is uncoupled, takes up heat from the weak solution prior to stress-relieving to the low-pressure level and is then once again coupled with the rich solution.

6. The absorption circuit process according to the aforementioned claim, **characterized in that** the partial flow comprises between 20 and 50 vH, preferably between 30 and 40 vH, of the strong solution.

7. The absorption circuit process according to one of the aforementioned claims, **characterized in that** a heating medium starting from an inlet temperature of between 80 and 160 °C, preferably between 90 and 110 °C, delivers the thermal heat flow.

8. The absorption circuit process according to one of the aforementioned claims, **characterized in that** refrigerant which is stress-relieved from the high-pressure level to the low-pressure level withdraws heat from a refrigerating medium starting from an inlet temperature of between +2 and -6 °C, preferably between 0 and -40 °C.

9. The absorption circuit process according to one of the aforementioned claims, **characterized in that** the refrigerant is ammonia and the solvent is water.

## Revendications

1. Machine à absorption (1) avec un agent frigorigène et un solvant liquide, une solution pauvre et une solution riche, sachant que la solution pauvre et la solution riche sont des mélanges monophasés du solvant et de l'agent frigorigène, et avec un absorbeur (10) dans lequel la solution pauvre absorbe l'agent frigorigène à un niveau de basse pression et dégage à cet effet la chaleur perdue, une pompe de solution (11), qui pompe la solution riche se formant à cet effet après sortie de l'absorbeur (10) à un niveau de haute pression, avec un bouilleur (14), dans lequel la solution riche reçoit un flux thermique chauffant après sortie de la pompe de solution (11), avec un séparateur (16) dans lequel l'agent frigorigène est séparé de la solution riche après sortie du bouilleur (14), sachant que la solution pauvre reste, avec un détendeur (19), dans lequel la solution pauvre est détendue du séparateur (16) au niveau de basse pression avant entrée dans l'absorbeur (10), avec un échangeur de chaleur à solution (12), dans lequel la solution riche entre la pompe de solution (11) et le bouilleur (14) reçoit de la chaleur de la solution pauvre entre le séparateur (16) et le détendeur (19) et avec un composant utile, qui détend l'agent frigorigène après sortie du séparateur (16) et avant entrée dans l'absorbeur (10) au niveau de basse pression et utilise techniquement une différence de potentiel de l'agent frigorigène entre le niveau de haute pression et le niveau de basse pression, **caractérisée par** un autre bouilleur (15) dans lequel un flux partiel découplé de la solution riche entre l'échangeur de chaleur à solution (12) et le bouilleur (14), guidé parallèlement au bouilleur (14) et injecté à nouveau dans la solution riche entre le bouilleur (14) et le séparateur (16) reçoit de la chaleur de la solution pauvre entre le séparateur (16) et l'échangeur de chaleur à solution (12).

2. Machine à absorption (1) selon la revendication précédente, **caractérisée en ce que** le composant utile comporte un condenseur (17), dans lequel l'agent frigorigène dégage après sortie du séparateur (16) une autre chaleur perdue, un détendeur (18), dans lequel l'agent frigorigène est détendu au niveau de basse pression après sortie du condenseur (17) et un évaporateur (8) dans lequel l'agent frigorigène s'évapore après sortie du détendeur (18) et extrait de la chaleur à cet effet d'un fluide frigoporteur.

3. Machine à absorption (1) selon la revendication précédente, **caractérisée par** un échangeur de chaleur à agent frigorigène (9), dans lequel l'agent frigorigène entre le condenseur (17) et le détendeur (18) délivre de la chaleur au frigorigène entre l'évaporateur (8) et l'absorbeur (10).

4. Machine à absorption selon la revendication 1, **caractérisée en ce que** le composant utile comporte une turbomachine avec un arbre rotatif, sachant que la turbomachine transforme la différence de potentiel en puissance mécanique de l'arbre rotatif.

5. Processus de circuit à absorption avec un agent frigorigène et un solvant liquide, une solution pauvre et une solution riche, sachant que la solution pauvre et la solution riche sont des mélanges monophasés du solvant et de l'agent frigorigène, sachant qu'à un niveau de basse pression, l'agent frigorigène est d'abord absorbé par la solution pauvre et dégage à cet effet une chaleur perdue, la solution riche se formant à cet effet est ensuite pompée à un niveau de haute pression, puis reçoit un flux thermique chauffant, qui extrait l'agent frigorigène de la solution pauvre restante et l'agent frigorigène et la solution pauvre sont finalement à nouveau détendus au niveau de basse pression, sachant que la solution riche reçoit de la chaleur au niveau de haute pression avant réception du flux thermique chauffant de la solution pauvre avant la détente au niveau de basse pression, **caractérisé en ce qu'**avant réception du flux thermique chauffant de la solution riche, un flux partiel est découplé, reçoit de la chaleur de la solution pauvre avant la détente au niveau de basse pression et est ensuite à nouveau injecté dans la solution riche.

6. Processus de circuit à absorption selon la revendication précédente, **caractérisé en ce que** le flux partiel comprend entre 20 et 50 vH, de préférence entre 30 et 40 vH de la solution riche.

7. Processus de circuit à absorption selon l'une quelconque des revendications précédentes, **caractérisé en ce qu'**un milieu chauffant partant d'une température d'entrée entre 80 et 160 °C, de préférence entre 90 et 110 °C délivre le flux thermique chauffant.

8. Processus de circuit à absorption selon l'une quelconque des revendications précédentes **caractérisé en ce que** l'agent frigorigène détendu du niveau de haute pression au niveau de basse pression extrait de la chaleur d'un fluide frigoporteur en partant d'une température d'entrée entre +2 et -6°C, de préférence entre 0 et - 40 °C.

9. Processus de circuit à absorption selon l'une quelconque des revendications précédentes **caractérisé en ce que** l'agent frigorigène est de l'ammoniac et le solvant de l'eau.
